(19) Europäisches Patentamt / European Patent Office / Office européen des brevets

(11) **EP 2 400 150 A2**

(12) **EUROPEAN PATENT APPLICATION**

(43) Date of publication:
**28.12.2011 Bulletin 2011/52**

(51) Int Cl.:
***F03D 7/02*** *(2006.01)*

(21) Application number: **11170690.9**

(22) Date of filing: **21.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.06.2010 US 821814**

(71) Applicant: **General Electric Company Schenectady, NY 12345 (US)**

(72) Inventors:
• **Menke, Detlef**
  **49505 Lotte (DE)**
• **Loh, Friedrich**
  **48465 Schuettorf (DE)**

(74) Representative: **Bedford, Grant Richard**
  **Global Patent Operation - Europe**
  **GE International Inc.**
  **15 John Adam Street**
  **London WC2N 6LU (GB)**

(54) **Overspeed protection system and method for wind turbines**

(57)    An overspeed protection system 200 for a wind turbine 100 having a hub 110 and at least one rotor blade 108 mounted to the hub includes a rotation sensor adapted for measuring a rotor speed of said wind turbine; a comparator connected to the rotation sensor and adapted for comparing the measured rotor speed with a predetermined threshold value of the rotor speed wherein the comparator outputs a signal indicative of the comparison; and an auxiliary pitch drive controller connected to the comparator and adapted to receive the signal indicative of the comparison, the auxiliary pitch drive controller being further adapted for controlling a pitch drive unit of the wind turbine 100 independently of a main turbine controller 202 and, if the threshold value is exceeded, to adjust a pitch angle of the rotor blade of the wind turbine so that aerodynamic braking of the wind turbine is effected.

FIG. 3

## Description

The subject matter described herein relates generally to methods and systems for controlling the operation of a wind turbine, and more particularly, to methods and systems for preventing an overspeed condition of a wind turbine.

Generally, a wind turbine includes a turbine that has a rotor that includes a rotatable hub assembly having multiple blades. The blades transform wind energy into a mechanical rotational torque that drives one or more generators via the rotor. The generators are sometimes, but not always, rotationally coupled to the rotor through a gearbox. The gearbox steps up the inherently low rotational speed of the rotor for the generator to efficiently convert the rotational mechanical energy to electrical energy, which is fed into a utility grid via at least one electrical connection. Gearless direct drive wind turbines also exist. The rotor, generator, gearbox and other components are typically mounted within a housing, or nacelle, that is positioned on top of a base that may be a truss or tubular tower.

Some wind turbine configurations include double-fed induction generators (DFIGs). Such configurations may also include power converters that are used to convert a frequency of generated electric power to a frequency substantially similar to a utility grid frequency. Moreover, such converters, in conjunction with the DFIG, also transmit electric power between the utility grid and the generator as well as transmit generator excitation power to a wound generator rotor from one of the connections to the electric utility grid connection. Alternatively, some wind turbine configurations include, but are not limited to, alternative types of induction generators, permanent magnet (PM) synchronous generators and electrically-excited synchronous generators and switched reluctance generators. These alternative configurations may also include power converters that are used to convert the frequencies as described above and transmit electrical power between the utility grid and the generator.

Known wind turbines have a plurality of mechanical and electrical components. Each electrical and/or mechanical component may have independent or different operating limitations, such as current, voltage, power, and/or temperature limits, than other components. Moreover, known wind turbines typically are designed and/or assembled with predefined rated power limits. To operate within such rated power limits, the electrical and/or mechanical components may be operated with large margins for the operating limitations. Such operation may result in inefficient wind turbine operation, and a power generation capability of the wind turbine may be underutilized.

A particular operating limitation of a wind turbine is a maximum rotational speed of the wind rotor. This threshold value of the rotor speed typically depends on the layout of the entire wind turbine. In order to maintain safe operating conditions, the maximum rotor speed should not be exceeded. Therefore, braking of the wind rotor is usually initiated if an overspeed condition is detected, i.e. if the rotor speed exceeds a threshold value. Typically, this threshold value is lower or equal to the maximum allowable rotor speed.

For larger wind turbine, the rotor may not be stopped by mechanical rotor brakes alone since the torque generated from the wind is too high. Therefore, aerodynamic braking of the wind turbine is used in these cases to reduce the rotor speed. Aerodynamic braking involves adjustment of the pitch angles of the rotor blades. For example, the pitch angles may be adjusted so that only a smaller fraction of power is captured from the incoming wind. Thus, the internal friction and the electrical load from the generator will slow down the rotor speed of the wind turbine. Typically, the aerodynamic braking is controlled by the wind turbine controller which is an electronic control device adapted to control the various processes of a wind turbine.

In view of the above, it would be desirable to provide a system capable of preventing a turbine from entering an overspeed condition even in cases where the internal communication system of the wind turbine is corrupted and the electric or electronic system of the wind turbine is damaged.

In view of the above, an aspect of the present invention provides an overspeed protection system for a wind turbine having a hub and at least one rotor blade mounted to said hub includes a rotation sensor adapted for measuring a rotor speed of the wind turbine; a comparator connected to the rotation sensor and adapted for comparing the measured rotor speed with a predetermined threshold value of the rotor speed wherein the comparator outputs a signal indicative of the comparison; and, an auxiliary pitch drive controller connected to the comparator and adapted to receive the signal indicative of the comparison, the auxiliary pitch drive controller being further adapted for controlling a pitch drive unit of the wind turbine independently of a main turbine controller and, if the threshold value is exceeded, to adjust a pitch angle of the rotor blade of the wind turbine so that aerodynamic braking of the wind turbine is effected.

According to a further embodiment, a wind turbine includes a rotatable hub and at least one rotor blade mounted to the hub, wherein a pitch angle of the rotor blade can be adjusted by a pitch drive system; a speed sensor adapted for measuring a rotational speed of the wind turbine; a detection unit connected to the speed sensor and adapted for detecting if the measured rotational speed exceeds a predetermined threshold value; and, an auxiliary pitch drive controller adapted to adjust a pitch angle of the rotor blade to effect aerodynamic braking of the wind turbine if the threshold value is exceeded, the auxiliary pitch drive controller being located within the hub and operable independent of wind turbine components not located in or at the hub.

According to another embodiment, a method for preventing an overspeed condition of a wind turbine includes measuring a rotational speed of a hub of the wind turbine; comparing the measured rotational speed with a predetermined threshold value; if the measured rotational speed exceeds the threshold value, operating an auxiliary pitch drive controller independent of a main turbine controller so that a pitch angle of at least one rotor blade of the wind turbine is adjusted to effect aerodynamic braking of the wind turbine.

Various aspects, advantages and features of the present invention are apparent from the dependent claims, the description and the accompanying drawings, in which:

Figure 1 is a perspective view of a portion of an exemplary wind turbine.

Figure 2 is a schematic view of an exemplary electrical and control system suitable for use with the wind turbine shown in Figure 1.

Fig. 3 is a block diagram showing a detection of a sensor signal from a rotation sensor and an adjustment of a pitch angle by means of a pitch drive unit, according to a typical embodiment;

Fig. 4 is another block diagram illustrating an overspeed protection system into acting with a main turbine controller, the wind turbine, according to another typical embodiment;

Fig. 5 is a block diagram illustrating a main turbine controller of the wind turbine interacting with an overspeed protection system, according to a typical embodiment;

Fig. 6 is a circuit diagram of a rotation sensor connected to a filter unit for providing a control signal for the overspeed protection system; and

Fig. 7 is a front view of a rotor of a wind turbine for illustrating the action of the gravitational force on a rotation sensor provided as a pendulum, according to another typical embodiment.

Reference will now be made in detail to the various embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

As used herein, the term "blade" is intended to be representative of any device that provides a reactive force when in motion relative to a surrounding fluid. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power.

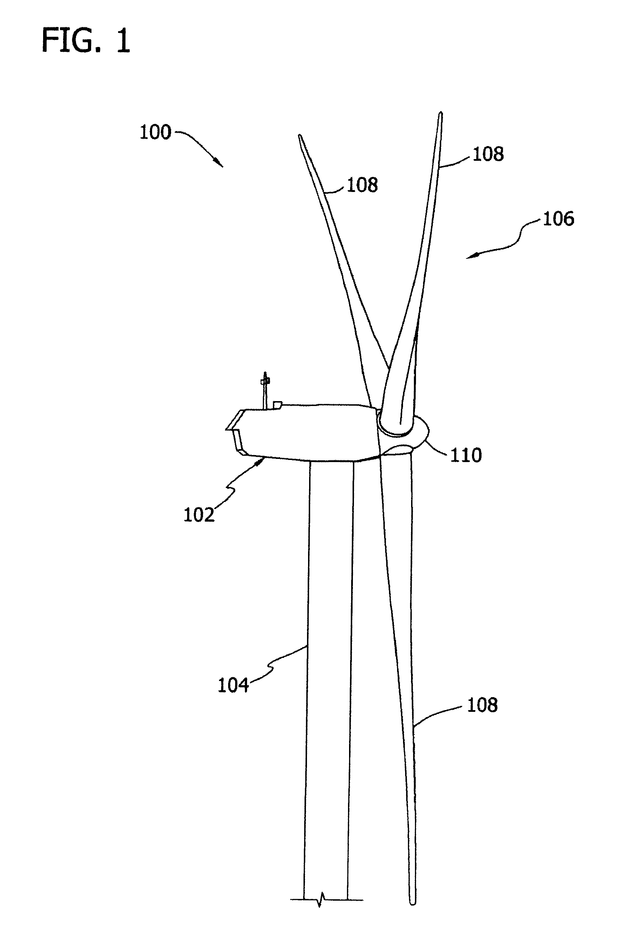

Figure 1 is a perspective view of a portion of an exemplary wind turbine 100. Wind turbine 100 includes a nacelle 102 housing a generator (not shown in Figure 1). Nacelle 102 is mounted on a tower 104 (a portion of tower 104 being shown in Figure 1). Tower 104 may have any suitable height that facilitates operation of wind turbine 100 as described herein. Wind turbine 100 also includes a rotor 106 that includes three blades 108 attached to a rotating hub 110. Alternatively, wind turbine 100 includes any number of blades 108 that facilitates operation of wind turbine 100 as described herein. In the exemplary embodiment, wind turbine 100 includes a gearbox (not shown in Figure 1) operatively coupled to rotor 106 and a generator (not shown in Figure 1).

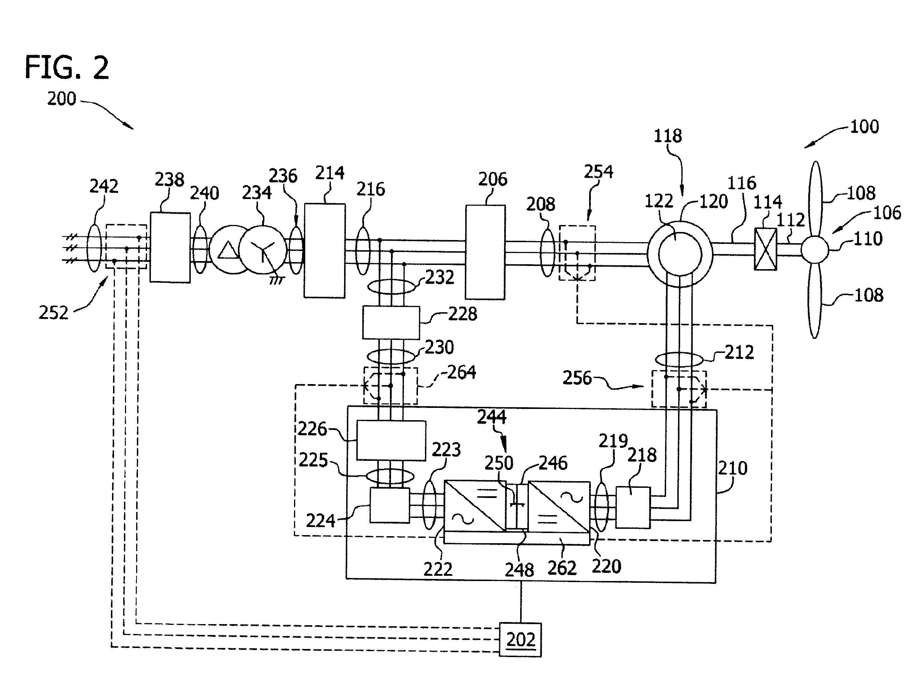

Figure 2 is a schematic view of an exemplary electrical and control system 200 that may be used with wind turbine 100. Rotor 106 includes blades 108 coupled to hub 110. Rotor 106 also includes a low-speed shaft 112 rotatably coupled to hub 110. Low-speed shaft 112 is coupled to a step-up gearbox 114 that is configured to step up the rotational speed of low-speed shaft 112 and transfer that speed to a high-speed shaft 116. In the exemplary embodiment, gearbox 114 has a step-up ratio of approximately 70:1. For example, low-speed shaft 112 rotating at approximately 20 revolutions per minute (rpm) coupled to gearbox 114 with an approximately 70:1 step-up ratio generates a speed for high-speed shaft 116 of approximately 1400 rpm. Alternatively, gearbox 114 has any suitable step-up ratio that facilitates operation of wind turbine 100 as described herein. As a further alternative, wind turbine 100 includes a direct-drive generator that is rotatably coupled to rotor 106 without any intervening gearbox.

High-speed shaft 116 is rotatably coupled to generator 118. In the exemplary embodiment, generator 118 is a wound rotor, three-phase, double-fed induction (asynchronous) generator (DFIG) that includes a generator stator 120 magnetically coupled to a generator rotor 122. In an alternative embodiment, generator rotor 122 includes a plurality of permanent magnets in place of rotor windings.

Electrical and control system 200 includes a turbine controller 202. Turbine controller 202 includes at least one processor and a memory, at least one processor input channel, at least one processor output channel, and may include at least one computer (none shown in Figure 2). As used herein, the term computer is not limited to integrated circuits referred to in the art as a computer, but broadly refers to a processor, a microcontroller, a microcomputer, a programmable logic controller (PLC), an application specific integrated circuit, and other programmable circuits (none shown in Figure 2), and these terms are used interchangeably herein. In the exemplary embodiment, memory may include, but is not limited to, a computer-readable medium, such as a random access memory (RAM) (none shown in Figure 2). Alternatively, one or more storage devices, such as a floppy disk, a compact disc read only memory (CD-ROM), a magneto-optical disk (MOD), and/or a digital versatile disc (DVD) (none shown in Figure 2) may also be used. Also, in the exemplary embodiment, additional input channels (not shown in Figure 2) may be, but are not limited to, computer peripherals associated with an operator interface such as a mouse and a keyboard (neither shown in Figure 2). Further, in the exemplary embodiment, additional output channels may include, but are not limited to, an operator interface monitor (not shown in Figure 2).

Processors for turbine controller 202 process information transmitted from a plurality of electrical and electronic devices that may include, but are not limited to, voltage and current transducers. RAM and/or storage devices store and transfer information and instructions to be executed by the processor. RAM and/or storage devices can also be used to store and provide temporary variables, static (i.e., non-changing) information and instructions, or other intermediate information to the processors during execution of instructions by the processors. Instructions that are executed include, but are not limited to, resident conversion and/or comparator algorithms. The execution of sequences of instructions is not limited to any specific combination of hardware circuitry and software instructions.

Generator stator 120 is electrically coupled to a stator synchronizing switch 206 via a stator bus 208. In an exemplary embodiment, to facilitate the DFIG configuration, generator rotor 122 is electrically coupled to a bi-directional power conversion assembly 210 via a rotor bus 212. Alternatively, generator rotor 122 is electrically coupled to rotor bus 212 via any other device that facilitates operation of electrical and control system 200 as described herein. As a further alternative, electrical and control system 200 is configured as a full power conversion system (not shown) that includes a full power conversion assembly (not shown in Figure 2) similar in design and operation to power conversion assembly 210 and electrically coupled to generator stator 120. The full power conversion assembly facilitates channeling electric power between generator stator 120 and an electric power transmission and distribution grid (not shown). In the exemplary embodiment, stator bus 208 transmits three-phase power from generator stator 120 to stator synchronizing switch 206. Rotor bus 212 transmits three-phase power from generator rotor 122 to power conversion assembly 210. In the exemplary embodiment, stator synchronizing switch 206 is electrically coupled to a main transformer circuit breaker 214 via a system bus 216. In an alternative embodiment, one or more fuses (not shown) are used instead of main transformer circuit breaker 214. In another embodiment, neither fuses nor main transformer circuit breaker 214 is used.

Power conversion assembly 210 includes a rotor filter 218 that is electrically coupled to generator rotor 122 via rotor bus 212. A rotor filter bus 219 electrically couples rotor filter 218 to a rotor-side power converter 220, and rotor-side power converter 220 is electrically coupled to a line-side power converter 222. Rotor-side power converter 220 and line-side power converter 222 are power converter bridges including power semiconductors (not shown). In the exemplary embodiment, rotor-side power converter 220 and line-side power converter 222 are configured in a three-phase, pulse width modulation (PWM) configuration including insulated gate bipolar transistor (IGBT) switching devices (not shown in Figure 2) that operate as known in the art. Alternatively, rotor-side power converter 220 and line-side power converter 222 have any configuration using any switching devices that facilitate operation of electrical and control system 200 as described herein. Power conversion assembly 210 is coupled in electronic data communication with turbine controller 202 to control the operation of rotor-side power converter 220 and line-side power converter 222.

In the exemplary embodiment, a line-side power converter bus 223 electrically couples line-side power converter 222 to a line filter 224. Also, a line bus 225 electrically couples line filter 224 to a line contactor 226. Moreover, line contactor 226 is electrically coupled to a conversion circuit breaker 228 via a conversion circuit breaker bus 230. In addition, conversion circuit breaker 228 is electrically coupled to main transformer circuit breaker 214 via system bus 216 and a connection bus 232. Alternatively, line filter 224 is electrically coupled to system bus 216 directly via connection bus 232 and includes any suitable protection scheme (not shown) configured to account for removal of line contactor 226 and conversion circuit breaker 228 from electrical and control system 200. Main transformer circuit breaker 214 is electrically coupled to an electric power main transformer 234 via a generator-side bus 236. Main transformer 234 is electrically coupled to a grid circuit breaker 238 via a breaker-side bus 240. Grid circuit breaker 238 is connected to the electric power transmission and distribution grid via a grid bus 242. In an alternative embodiment, main transformer 234 is electrically coupled to one or more fuses (not shown), rather than to grid circuit breaker 238, via breaker-side bus 240. In another embodiment, neither fuses nor grid circuit breaker 238 is used, but rather main transformer 234 is coupled to the electric power transmission and distribution grid via breaker-side bus 240 and grid bus 242.

In the exemplary embodiment, rotor-side power converter 220 is coupled in electrical communication with line-side power converter 222 via a single direct current (DC) link 244. Alternatively, rotor-side power converter 220 and line-side power converter 222 are electrically coupled via individual and separate DC links (not shown in Figure 2). DC link 244 includes a positive rail 246, a negative rail 248, and at least one capacitor 250 coupled between positive rail 246 and negative rail 248. Alternatively, capacitor 250 includes one or more capacitors configured in series and/or in parallel between positive rail 246 and negative rail 248.

Turbine controller 202 is configured to receive a plurality of voltage and electric current measurement signals from a first set of voltage and electric current sensors 252. Moreover, turbine controller 202 is configured to monitor and control at least some of the operational variables associated with wind turbine 100. In the exemplary embodiment, each of three voltage and electric current sensors 252 are electrically coupled to each one of the three phases of grid bus 242. Alternatively, voltage and electric current sensors 252 are electrically coupled to system bus 216. As a further alternative, voltage and electric current sensors 252 are electrically coupled to any portion of electrical and control system 200 that facilitates operation of electrical and control system 200 as described herein. As a still further alternative, turbine controller 202 is configured to receive any number of voltage and electric current measurement signals from any number of voltage and electric current sensors 252 including, but not limited to, one voltage and electric current measurement signal from one transducer.

As shown in Figure 2, electrical and control system 200 also includes a converter controller 262 that is configured to receive a plurality of voltage and electric current measurement signals. For example, in one embodiment, converter controller 262 receives voltage and electric current measurement signals from a second set of voltage and electric current sensors 254 coupled in electronic data communication with stator bus 208. Converter controller 262 receives a third set of voltage and electric current measurement signals from a third set of voltage and electric current sensors 256 coupled in electronic data communication with rotor bus 212. Converter controller 262 also receives a fourth set of voltage and electric current measurement signals from a fourth set of voltage and electric current sensors 264 coupled in electronic data communication with conversion circuit breaker bus 230. Second set of voltage and electric current sensors 254 is substantially similar to first set of voltage and electric current sensors 252, and fourth set of voltage and electric current sensors 264 is substantially similar to third set of voltage and electric current sensors 256. Converter controller 262 is substantially similar to turbine controller 202 and is coupled in electronic data communication with turbine controller 202. Moreover, in the exemplary embodiment, converter controller 262 is physically integrated within power conversion assembly 210. Alternatively, converter controller 262 has any configuration that facilitates operation of electrical and control system 200 as described herein.

During operation, wind impacts blades 108 and blades 108 transform wind energy into a mechanical rotational torque that rotatably drives low-speed shaft 112 via hub 110. Low-speed shaft 112 drives gearbox 114 that subsequently steps up the low rotational speed of low-speed shaft 112 to drive high-speed shaft 116 at an increased rotational speed. High speed shaft 116 rotatably drives generator rotor 122. A rotating magnetic field is induced by generator rotor 122 and a voltage is induced within generator stator 120 that is magnetically coupled to generator rotor 122. Generator 118 converts the rotational mechanical energy to a sinusoidal, three-phase alternating current (AC) electrical energy signal in generator stator 120. The associated electrical power is transmitted to main transformer 234 via stator bus 208, stator synchronizing switch 206, system bus 216, main transformer circuit breaker 214 and generator-side bus 236. Main transformer 234 steps up the voltage amplitude of the electrical power and the transformed electrical power is further transmitted to a grid via breaker-side bus 240, grid circuit breaker 238 and grid bus 242.

In the exemplary embodiment, a second electrical power transmission path is provided. Electrical, three-phase, sinusoidal, AC power is generated within generator rotor 122 and is transmitted to power conversion assembly 210 via rotor bus 212. Within power conversion assembly 210, the electrical power is transmitted to rotor filter 218 and the electrical power is modified for the rate of change of the PWM signals associated with rotor-side power converter 220. Rotor-side power converter 220 acts as a rectifier and rectifies the sinusoidal, three-phase AC power to DC power. The DC power is transmitted into DC link 244. Capacitor 250 facilitates mitigating DC link 244 voltage amplitude variations by facilitating mitigation of a DC ripple associated with AC rectification.

The DC power is subsequently transmitted from DC link 244 to line-side power converter 222 and line-side power converter 222 acts as an inverter configured to convert the DC electrical power from DC link 244 to three-phase, sinusoidal AC electrical power with pre-determined voltages, currents, and frequencies. This conversion is monitored and controlled via converter controller 262. The converted AC power is transmitted from line-side power converter 222 to system bus 216 via line-side power converter bus 223 and line bus 225, line contactor 226, conversion circuit breaker bus 230, conversion circuit breaker 228, and connection bus 232. Line filter 224 compensates or adjusts for harmonic currents in the electric power transmitted from line-side power converter 222. Stator synchronizing switch 206 is configured to close to facilitate connecting the three-phase power from generator stator 120 with the three-phase power from power conversion assembly 210.

Conversion circuit breaker 228, main transformer circuit breaker 214, and grid circuit breaker 238 are configured to disconnect corresponding buses, for example, when excessive current flow may damage the components of electrical and control system 200. Additional protection components are also provided including line contactor 226, which may be controlled to form a disconnect by opening a switch (not shown in Figure 2) corresponding to each line of line bus 225.

Power conversion assembly 210 compensates or adjusts the frequency of the three-phase power from generator rotor 122 for changes, for example, in the wind speed at hub 110 and blades 108. Therefore, in this manner, mechanical and electrical rotor frequencies are decoupled from stator frequency.

Under some conditions, the bi-directional characteristics of power conversion assembly 210, and specifically, the bi-directional characteristics of rotor-side power converter 220 and line-side power converter 222, facilitate feeding back at least some of the generated electrical power into generator rotor 122. More specifically, electrical power is transmitted from system bus 216 to connection bus 232 and subsequently through conversion circuit breaker 228 and conversion circuit breaker bus 230 into power conversion assembly 210. Within power conversion assembly 210, the electrical power is transmitted through line contactor 226, line bus 225, and line-side power converter bus 223 into line-side power converter 222. Line-side power converter 222 acts as a rectifier and rectifies the sinusoidal, three-phase AC power to DC power. The DC power is transmitted into DC link 244. Capacitor 250 facilitates mitigating DC link 244 voltage amplitude variations by facilitating mitigation of a DC ripple sometimes associated with three-phase AC rectification. The DC power is subsequently transmitted from DC link 244 to rotor-side power converter 220 and rotor-side power converter 220 acts as an inverter configured to convert the DC electrical power transmitted from DC link 244 to a three-phase, sinusoidal AC electrical power with pre-determined voltages, currents, and frequencies. This conversion is monitored and controlled via converter controller 262. The converted AC power is transmitted from rotor-side power converter 220 to rotor filter 218 via rotor filter bus 219 and is subsequently transmitted to generator rotor 122 via rotor bus 212, thereby facilitating sub-synchronous operation.

Power conversion assembly 210 is configured to receive control signals from turbine controller 202. The control signals are based on sensed conditions or operating characteristics of wind turbine 100 and electrical and control system 200. The control signals are received by turbine controller 202 and used to control operation of power conversion assembly 210. Feedback from one or more sensors may be used by electrical and control system 200 to control power conversion assembly 210 via converter controller 262 including, for example, conversion circuit breaker bus 230, stator bus and rotor bus voltages or current feedbacks via second set of voltage and electric current sensors 254, third set of voltage and electric current sensors 256, and fourth set of voltage and electric current sensors 264. Using this feedback information, and for example, switching control signals, stator synchronizing switch control signals and system circuit breaker control (trip) signals may be generated in any known manner. For example, for a grid voltage transient with predetermined characteristics, converter controller 262 will at least temporarily substantially suspend the IGBTs from conducting within line-side power converter 222. Such suspension of operation of line-side power converter 222 will substantially mitigate electric power being channeled through power conversion assembly 210 to approximately zero.

A number of embodiments will be explained below. In this case, identical structural features are identified by identical reference symbols in the drawings. The structures shown in the drawings are not depicted true to scale but rather serve only for the better understanding of the embodiments.

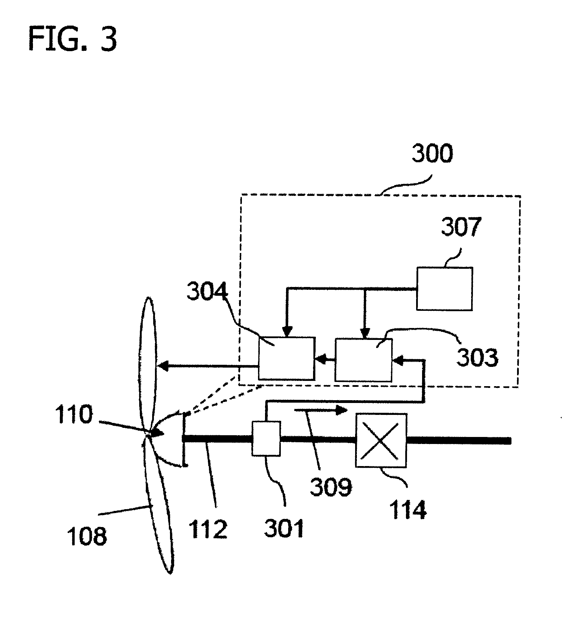

Fig. 3 is a schematic block diagram of an overspeed protection system 300 according to a typical embodiment. Fig. 3 depicts components of the rotor of the wind turbine such as the hub 110 having attached at least one rotor blade 108. The hub is connected to the main shaft 112 which in turn is connected to a rotation sensor 301.

According to a typical embodiment the overspeed protection system 300 may be arranged within the hub 110 of the wind turbine 100. This means that an auxiliary pitch drive controller 303 may be provided which is adapted for controlling the pitch drive unit 304. According to a typical embodiment of the present invention, the auxiliary pitch drive controller 303 is adapted to operate independently of the main turbine controller 110 in a self-sustained manner. In case of a failure occurring during the operation of the wind turbine 100, e.g. if the main controller 202 is not capable of appropriately controlling the rotor speed, the auxiliary pitch drive controller 303 provides such control.

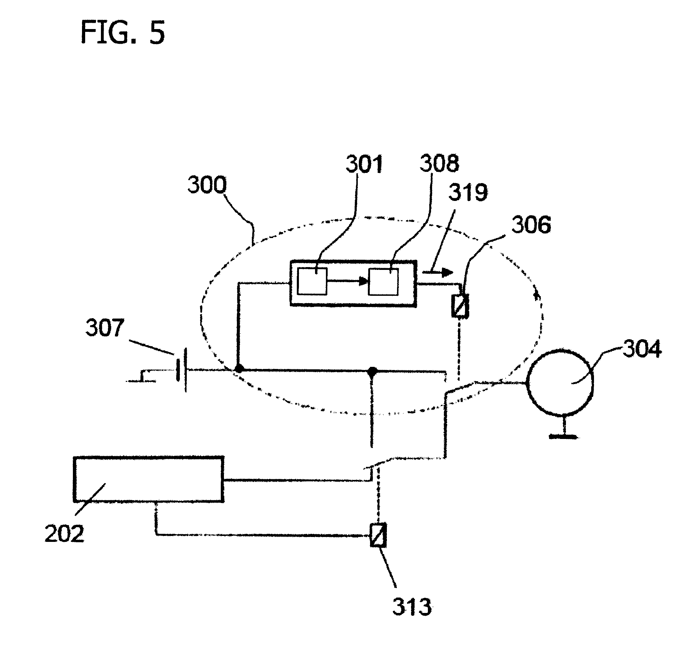

The main turbine controller 202 is typically located within the machine nacelle 102 of the wind turbine 100 and, thus, outside hub 110. Accordingly, main controller 202 is not rotating together with the rotor. In case of a failure of the main controller 202, the auxiliary pitch drive controller 303 installed within hub 110 may take over control functions of the main controller 202 such as, but not limited to, overspeed protection such that the rotor speed of the wind turbine 100 is controlled to remain within operational limits. For such adjustment, the actual rotational speed of the rotor may be measured independently of rotation detection means provided for the main wind turbine controller 202. Such independent rotation measurement may be provided within the hub 110 by means of a rotation sensor 301 adapted for detecting a gravitational force direction such as a pendulum unit 514 described herein below with respect to Fig. 5.

Thus, according to one embodiment which may be combined with other embodiments described herein, the overspeed protection system 300 including the rotation sensor 301, the auxiliary pitch drive controller 303 and an auxiliary power supply 307 for providing the rotation sensor 301, the auxiliary pitch drive controller 303 and the pitch drive unit 304 with electrical energy, is completely installed within the hub 110 of wind turbine 100 and adapted to function on a self-sustained basis.

The main shaft 112 is connected to the input of the gear box 114. An output signal of the rotation sensor 301, i.e. a sensor signal 309 is fed to the auxiliary pitch drive controller 303 which is used for a pitch control in case of an emergency operation. Such kind of emergency operation may occur if the main turbine controller (not shown in Fig. 3) fails or if an energy supply system for the main turbine controller 202 and/or other components break down. The auxiliary pitch drive controller 303 is provided with electrical energy by means of the auxiliary power supply 307, for example a battery or a capacitor. Typically, wind turbines are equipped with such auxiliary power supplies to enable operation of the pitch drive during power outage od in emergency situations.

As indicated in Fig. 3, an overspeed protection system 300 according to a typical embodiment, includes the auxiliary pitch drive controller 303, the auxiliary power supply 307 and the pitch drive unit 304 adapted for adjusting the pitch angle of at least one rotor blade 108. The rotation sensor 301 which is connected to the main shaft 112 for detecting a rotational frequency of the rotor shaft 112, i.e. a signal indicating how many rotations per minute are presently carried out by the rotor of the wind turbine, may include, but is not restricted to, a pendulum unit, a gravitational force detection element, an acceleration sensor, a dynamo-electric generator, an optical detector, and any combination thereof.

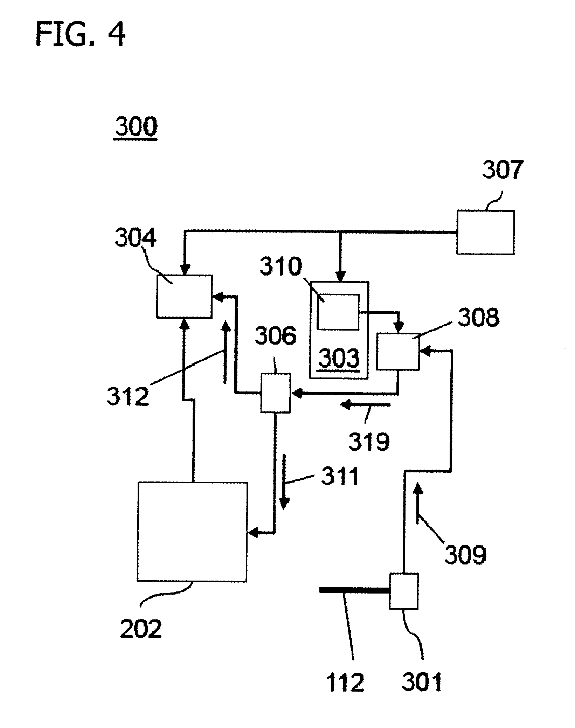

The overspeed protection system 300 is configured to provide a battery-driven shut-down which is independent of a communication established between a turbine controller, e.g. the main turbine controller 202 (see Fig. 4) and the pitch drive unit 304. The auxiliary power supply 307 may be selected from the group consisting of a battery, a capacitor, in particular an ultracap, an electrical generator, e.g. driven by the rotor, a solar panel, and any combination of the foregoing. According to one embodiment, the the auxiliary power supply may be charged or recharged during normal operation of the wind turbine.

It is noted here that the entire overspeed protection system 300 may be housed within the hub 110 of the rotor 106 of wind turbine 100. Furthermore, the rotational frequency of the rotor, i.e. the actual rotor speed, may be measured by detecting an acceleration signal provided by an acceleration sensor installed within the hub 110.

According to one embodiment, the output signal of the acceleration sensor may be used for evaluating the rotational frequency of the rotor. Furthermore, a gradient of the acceleration signal provided by the acceleration sensor may be evaluated additionally or alternatively for determining the rotational frequency. For example, the gradient of the acceleration sensor may be the first derivative in time of the acceleration signal.

In order to avoid excess rotor speed, i.e. in order to avoid that the measured rotational frequency exceeds the permissible rotational frequency, the auxiliary pitch drive controller 303 is operated such that the pitch angle of one or more rotor blades 108 is adjusted such that the measured rotational frequency of the rotor 106 drops below the permissible rotational frequency. Furthermore, it is possible to adjust the pitch angle of an individual rotor blade 108 such that the rotor blade 108 assumes a feathered position. If all rotor blades 108 of the rotor 106 are in the feathered position, the rotor 106 stops rotating even if incoming wind impinges onto the blades.

Fig. 4 is a signal flow diagram illustrating an overspeed protection system according to a typical embodiment. Reference numeral 202 indicates the main turbine controller of the wind turbine 100 which is, inter alia, responsible for adjusting the individual rotor blades 108 of the rotor by means of respective pitch drive units 304. Thus, the main turbine controller 202 is connected to the pitch drive unit 304 of an individual rotor blade.

According to a typical embodiment, the pitch angle of an individual rotor blade 108 may also be adjusted by auxiliary pitch drive controller 303 which sends a signal representing a rotor speed threshold value from a memory unit 310 to a comparator 308. At a second input terminal, the comparator 308 receives the sensor signal 309 provided by the rotation sensor 301 which is connected to the main shaft 112. The comparator 308 is adapted for comparing the measured rotational frequency of the rotor with the predetermined (e.g. stored in the memory unit 310) threshold value of the rotational frequency of the rotor and for outputting a signal 319 indicative of the result of the comparison. The comparison signal 319 is fed to a switching unit 306 which is adapted for switching its output between the main turbine controller 202 and the pitch drive unit 304.

It is noted here that, in order to ease the explanation of the drawings, only a schematic block diagram of the overspeed protection system 300 is shown. The switching unit 306 is provided for switching between normal operation and "emergency operation". During normal operation, the main turbine controller 202 is active and receives a normal operation signal 311. In an emergency case, e.g. if a rotational frequency of the rotor exceeds the permissible rotational frequency of the rotor, an overspeed detection signal 312 is sent to the pitch drive unit 304. The pitch drive unit 304 then controls the pitch angle of an individual rotor blade 108 in accordance with the comparison signal 319 provided by the comparator 308.

As both the pitch drive unit 304 and the auxiliary pitch drive controller 303 together with the comparator 308 are provided with electrical energy from the auxiliary power supply 307, the overspeed protection system 300 operates even in case the main turbine controller 202 or a power supply for the entire wind turbine control system fails or is switched off.

Thus it is possible to prevent an overspeed rotation of the rotor and to provide a safe operation for the wind turbine. In addition to that, albeit not shown in the drawings, instead of operating the pitch drive unit 304 such that an excessive rotation speed of the rotor is prevented, rotor brakes may be operated by the overspeed protection system 300. Rotor brakes may be provided such that, in case an overspeed rotation of the rotor is detected, the main shaft 112 of the rotor is stopped. Thus even in heavy wind situations, damage to the wind turbine may be avoided.

The overspeed protection system 300 according to at least one of the embodiments described herein above, may thus operate as an emergency system which is an independent back-up system for providing a safe operation of the wind turbine, i.e. for ensuring that the actual rotational frequency of the rotor does not exceed the permissible rotational frequency of the rotor. The pitch drive unit 304 of the wind turbine 100 may thus be adjusted on the basis of the detected overspeed.

Fig. 5 is a schematic block diagram of an overspeed protection system 300 according to a typical embodiment. As shown in Fig. 5, a main turbine controller 202 is connected to a pitch drive switch 313. The pitch drive switch 313 is adapted for connecting the auxiliary power supply 307 directly to the pitch drive unit 304. A direct connection of the pitch drive switch 313, which is controlled by the main turbine controller 202, to the auxiliary power supply 307 occurs in cases where the main turbine controller 202 exhibits a failure.

It is noted here that the connection of the pitch drive unit 304 with the auxiliary power supply 307 is only schematic, i.e. the connection results in an operation state in which the pitch drive unit 304 drives the rotor blades 202 in such a position that the rotor of the wind turbine stops rotating.

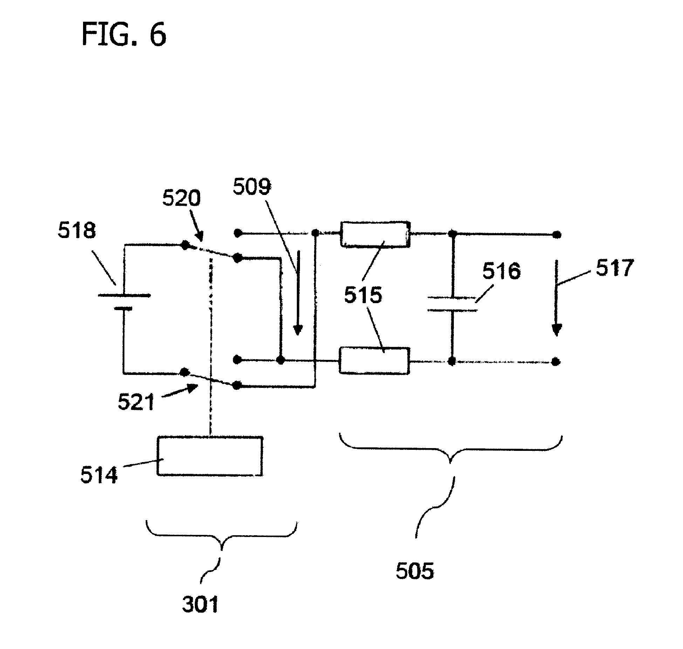

The overspeed detection system 300 in accordance with the typical embodiment includes the rotation sensor 301, which is based on the detection of a gravitational force and is detailed in Fig. 6 described below. The rotation sensor 301 and the comparator 308 output a comparison signal 319 which drives the switching unit 306. The switching unit 306 acts in a similar way as the pitch drive switch 313 described herein above.

If an emergency situation occurs, e.g. if the actual rotational frequency of the rotor exceeds the permissible rotational frequency of the rotor, the switching unit 306 is actuated on the basis of the comparison signal 319 such that the switching unit 306 connects the pitch drive unit 304 to the auxiliary power supply. Again, this connection results in an operation state in which the rotor blades are adjusted to assume a feathered position, i.e. in a position which causes the rotor 106 to stop rotating.

Thus, a shut-down or at least a speed reduction of the wind turbine is performed. The switching unit 306 may be provided as an overspeed relais, which is operated on the basis of the measured rotational frequency. The overspeed relay connects the pitch drive unit 304 to the auxiliary pitch drive controller (not shown).

Fig. 6 is a schematic circuit diagram of an arrangement adapted for providing a signal which controls the switching unit 306. The system shown in Fig. 6 includes a rotation sensor 301 provided as a pendulum unit 514, and a filter unit 505 including two resistors 515 and a capacitor 516. The pendulum 514 includes two switches 520, 521 driven by the gravitational force acting on the pendulum unit 514.

The pendulum unit 514 acts as a gravitational force detection element adapted for detecting a change rate in a gravitational force direction. The pendulum unit 514 therefore includes a weight held by a bar such that the axis of the bar approximately corresponds to the direction of the gravitational force. Another end of the bar may be mounted at a shaft rotatably arranged within the hub of the wind turbine. The shaft, which is rotating as the rotor of the wind turbine rotates, may drive at least one switching unit. The at least one switching unit may output a sensor signal 509 which is related to the rotation of the shaft, and thus is related to the rotation of the rotor of the wind turbine. The switching unit, for example, may be designed such that it outputs a single pulse for each full rotation of the rotor. The rotational frequency of the rotor of the wind turbine is then evaluated from the detected change rate in the gravitational force direction. The rotational frequency may be detected by determining the gravitation sensor output signal 509, as indicated in Fig. 6. From the measured rotational frequency a possible overspeed condition may be detected.

A voltage source 518 is connected via the switches 520, 521 to the filter unit 505, i.e. a first (+) terminal of the voltage supply source 518 is connected to a first pendulum switch 520, wherein a (-) terminal of the voltage supply source 518 is connected to a second pendulum switch 521.

As shown in Fig. 6, the sensor signal 509 is provided as a polarity reversal voltage corresponding to the change rate of the detected gravitational force direction measured by the gravitational sensor operated as the pendulum unit 514. Thus the rotation sensor 301 indicated in Fig. 6 provides one voltage reversal per one full rotation of the rotor, i.e. during one full rotation of the rotor the sensor signal successively assumes the voltage of the voltage supply source 518, the reversed voltage of the voltage supply source 518, and the voltage of the voltage supply source 518, in this order. In accordance with the rotational frequency of the rotor 106, a frequency $f_{out}$ of the sensor signal 509 is applied at the filter unit 505. The filter unit has a cut-off frequency which is given by the following equation:

$$f_{\text{filter,cut-off}} = 1/(2\pi RC) = f_{\text{limit}}$$

The relation of the actual rotational frequency

of the rotor $f_{out}$ with respect to the cut-off frequency of the filter $f_{limit}$ determines the filter unit output signal 517, if the following relation holds:

$$f_{out} < f_{limit}$$

This means that the filter unit output signal 517 corresponds approximately to the amplitude of the voltage provided by the voltage supply source 518. If, however, the frequency $f_{out}$ of the sensor signal 509 is equal to or exceeds the filter cut-off frequency $f_{limit}$, the amplitude of the filter unit output signal 517 drops to a lower value than the amplitude of the voltage supply source. Typically, the filter unit output signal 517 amounts to about 70 % of the sensor signal 509 in amplitude units, if the relation holds:

$$f_{out} = f_{limit}$$

The filter unit is adapted for filtering the sensor signal 509 output by the rotation sensor 301, wherein the filter unit has a cut-off frequency which is in a range from 0.5 times the permissible rotational frequency to 1.5 times the permissible rotational frequency, and approximately corresponds to the permissible rotational frequency of the rotor.

The filter unit output signal 517 then is used as a control signal for the switching unit 306 (not shown in Fig. 6). Thus, if the filter unit output signal 517 drops below a predetermined level, the switching unit 306 is switched such that the overspeed protection system 300 in accordance with one of the embodiments described above is active.

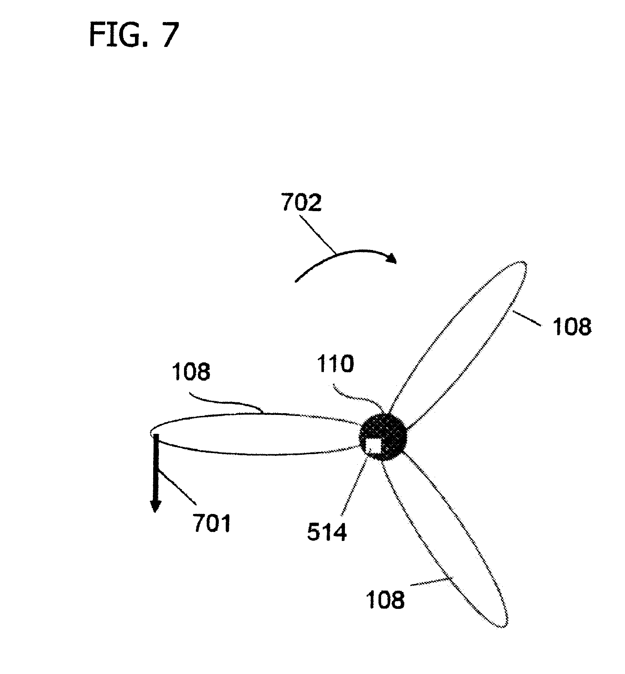

Fig. 7 is a front view of the rotor of a wind turbine including the hub 110 and three rotor blades 108. The gravitational force 701 acts downwards and also acts on a rotation sensor 301 provided as the pendulum unit 514 in accordance with the schematic set-up shown in Fig. 6. If the rotor of the wind turbine is rotating in a rotational direction indicated by an arrow 702, a switching of the polarity of the voltage supply source 518 occurs, as described above. The pendulum unit 514 illustrated in Fig. 6 acts as a toggling mass and provides the sensor output signal 509 without the use of electronic components such as transistors, integrated circuits etc.

Exemplary embodiments of systems and methods for preventing an overspeed condition of a wind turbine are described above in detail. The systems and methods are not limited to the specific embodiments described herein, but rather, components of the systems and/or steps of the methods may be utilized independently and separately from other components and/or steps described herein. For example, the embodiments described herein can also be applied in a wind turbine without a gearbox, and are not limited to practice with only the wind turbine systems as described herein. Rather, the exemplary embodiment can be implemented and utilized in connection with many other rotor blade applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the preferred mode, and also to enable any person skilled in the art to practice the invention, including making and using any devices or systems and performing any incorporated methods. While various specific embodiments have been disclosed in the foregoing, those skilled in the art will recognize that the spirit and scope of the claims allows for equally effective modifications. Especially, mutually non-exclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

1. An overspeed protection system for a wind turbine having a hub and at least one rotor blade mounted to said hub, comprising:

a rotation sensor adapted for measuring a rotor speed of said wind turbine;

a comparator connected to said rotation sensor and adapted for comparing the measured rotor speed with a predetermined threshold value of said rotor speed wherein the comparator outputs a signal indicative of said comparison; and,

an auxiliary pitch drive controller connected to said comparator and adapted to receive said signal indicative of the comparison, the auxiliary pitch drive controller being further adapted for controlling a pitch drive unit of the wind turbine independently of a main turbine controller and, if said threshold value is exceeded, to adjust a pitch angle of the rotor blade of the wind turbine so that aerodynamic braking of the wind turbine is effected.

2. The overspeed protection system according to clause 1, wherein the system is adapted to be installed in the hub of said wind turbine and to operate self-sustained therein.

3. The overspeed protection system according to any preceding clause, wherein the rotation sensor is selected from the group consisting of a pendulum device, a gravitational force detection element, an acceleration sensor, a dynamo-electric generator, an optical detector, and any combination thereof.

4. The overspeed protection system according to any preceding clause, wherein the rotation sensor is a pendulum device adapted to oscillate in accordance with the rotor speed.

5. The overspeed protection system according to any preceding clause, wherein the pendulum device comprises a pendulum coupled to an electric switch such that the switch is operated in accordance with the rotor speed.

6. The overspeed protection system according to any preceding clause, further comprising a low-pass filter adapted for low-pass filtering an output signal of the electric switch.

7. The overspeed protection system according to any preceding clause, further wherein the low-pass filter has a cut-off frequency which is in the range from about 50% to about 150% of the rotor speed threshold value.

8. The overspeed protection system according to any preceding clause, wherein the system is connectable to an auxiliary power supply located at the hub.

9. The overspeed protection system according to any preceding clause, wherein the auxiliary power supply is selected from the group consisting of a battery, a capacitor, an electric generator, a solar panel, and any combination thereof.

10. The overspeed protection system according to any preceding clause, further comprising a switching device adapted to connect the pitch drive unit of the wind turbine to the auxiliary pitch drive controller, the switching device being activated if said rotor speed threshold value is exceeded.

11. The overspeed protection system according to any preceding clause, wherein the pitch drive unit comprises at least one electric pitch motor and said auxiliary pitch drive controller is adapted to control said electric pitch motor.

12. A wind turbine, comprising:

a rotatable hub and at least one rotor blade mounted to said hub, wherein a pitch angle of said rotor blade can be adjusted by a pitch drive system;

a speed sensor adapted for measuring a rotational speed of said wind turbine;

a detection unit connected to said speed sensor and adapted for detecting if the measured rotational speed exceeds a predetermined threshold value; and,

an auxiliary pitch drive controller adapted to adjust a pitch angle of said rotor blade to effect aerodynamic braking of the wind turbine if said threshold value is exceeded, the auxiliary pitch drive controller being located within said hub and operable independent of wind turbine components not located in or at the hub.

13. The wind turbine according to any preceding clause, wherein the rotation sensor is a pendulum device adapted to oscillate in accordance with the rotor speed, the pendulum being coupled to an electric switch such that the switch is operated in accordance with the rotor speed.

14. The wind turbine according to any preceding clause, further comprising a low-pass filter adapted for low-pass filtering an output signal of the electric switch, the low-pass filter having a cut-off frequency which is in the range from about 50% to about 150% of the rotational speed threshold value.

15. The wind turbine according to any preceding clause, wherein the auxiliary pitch drive controller is connected to an auxiliary power supply located at the hub via a switching device, the switching device being operated upon exceeding of the rotational speed threshold value.

16. The wind turbine according to any preceding clause, wherein the wind turbine comprises a plurality of rotor blades and the auxiliary pitch drive controller is adapted to adjust the pitch angle of each rotor blade.

17. The wind turbine according to any preceding clause, wherein the wind turbine comprises a plurality of rotor blades and a plurality of auxiliary pitch drive controllers, each rotor blade being connected to an auxiliary pitch drive controller, each auxiliary pitch drive controller being adapted to adjust the pitch angle of the rotor blade to which it is connected.

18. A method for preventing an overspeed condition of a wind turbine, the method comprising:

measuring a rotational speed of a hub of said wind turbine;

comparing the measured rotational speed with a predetermined threshold value;

if the measured rotational speed exceeds the threshold value, operating an auxiliary pitch drive controller independent of a main turbine controller so that

a pitch angle of at least one rotor blade of the wind turbine is adjusted to effect aerodynamic braking of the wind turbine.

19. The method according to any preceding clause, wherein the gradient of an acceleration signal is evaluated for determining the rotational speed.

20. The method according to any preceding clause, wherein an overspeed relais is operated on the basis of the measured rotational speed, the overspeed relais connecting the auxiliary pitch drive controller to a pitch drive unit of said rotor blade.

**Claims**

1. An overspeed protection system (300) for a wind turbine (100) having a hub (110) and at least one rotor blade (108) mounted to said hub, comprising:

    a rotation sensor (301) adapted for measuring a rotor speed of said wind turbine;
    a comparator (308) connected to said rotation sensor and adapted for comparing the measured rotor speed with a predetermined threshold value of said rotor speed wherein the comparator outputs a signal indicative of said comparison; and
    an auxiliary pitch drive controller (303) connected to said comparator and adapted to receive said signal indicative of the comparison, the auxiliary pitch drive controller being further adapted for controlling a pitch drive unit (304) of the wind turbine independently of a main turbine controller and, if said threshold value is exceeded, to adjust a pitch angle of the rotor blade of the wind turbine so that aerodynamic braking of the wind turbine is effected.

2. The overspeed protection system (300) according to claim 1, wherein the system is adapted to be installed in the hub (110) of said wind turbine (100) and to operate self-sustained therein.

3. The overspeed protection system (300) according to any of the preceding claims, wherein the rotation sensor (301) is a pendulum device adapted to oscillate in accordance with the rotor speed, the pendulum being coupled to an electric switch such that the switch is operated in accordance with the rotor speed.

4. The overspeed protection system (300) according to claim 3, further comprising a low-pass filter adapted for low-pass filtering an output signal of the electric switch.

5. The overspeed protection system (300) according to claim 4, further wherein the low-pass filter has a cut-off frequency which is in the range from about 50% to about 150% of the rotor speed threshold value.

6. The overspeed protection system (300) according to any preceding claim, wherein the system is connectable to an auxiliary power supply located at the hub (110).

7. The overspeed protection system (300) according to any of the preceding claims, further comprising a switching device adapted to connect the pitch drive unit of the wind turbine to the auxiliary pitch drive controller, the switching device being activated if said rotor speed threshold value is exceeded.

8. A wind turbine (100), comprising:

    a rotatable hub (110) and at least one rotor blade (108) mounted to said hub, wherein a pitch angle of said rotor blade can be adjusted by a pitch drive system; and
    an overspeed protection system (300) according to any of the preceding claims.

9. A method for preventing an overspeed condition of a wind turbine, the method comprising:

    measuring a rotational speed of a hub (110) of said wind turbine (100);
    comparing the measured rotational speed with a predetermined threshold value;
    if the measured rotational speed exceeds the threshold value, operating an auxiliary pitch drive controller (303) independent of a main turbine controller so that
    a pitch angle of at least one rotor blade (108) of the wind turbine (100) is adjusted to effect aerodynamic braking of the wind turbine.

10. The method according to claim 9, wherein an overspeed relais is operated on the basis of the measured rotational speed, the overspeed relais connecting the auxiliary pitch drive controller (303) to a pitch drive unit of said rotor blade (108).

# FIG. 1

FIG. 2

# FIG. 3

# FIG. 4

# FIG. 5

# FIG. 6

# FIG. 7

702

108

110

108

701

514

108